Europäisches Patentamt

European Patent Office

Office européen des brevets

(19)

(11) Numéro de publication: **0 210 602**
**A1**

## (12) DEMANDE DE BREVET EUROPEEN

(21) Numéro de dépôt: 86110193.9

(22) Date de dépôt: 24.07.86

(51) Int. Cl.⁴: **G 01 N 3/02**
**G 01 N 3/30**

(30) Priorité: 30.07.85 LU 86025

(43) Date de publication de la demande:
04.02.87 Bulletin 87/6

(84) Etats contractants désignés:
BE DE FR GB IT LU NL

(71) Demandeur: COMMUNAUTE EUROPEENNE DE
L'ENERGIE ATOMIQUE (EURATOM)
Bâtiment Jean Monnet Plateau du Kirchberg Boîte
Postale 1907
L-1019 Luxembourg(LU)

(72) Inventeur: Albertini, Carlo
Via dei Pini 17
I-21020 Ispra(IT)

(72) Inventeur: Montagnani, Mario
Via G. Rossi 5
Bologna(IT)

(72) Inventeur: Morini, Romano
Podere Auriga 1
Angera(IT)

(72) Inventeur: Prosdocimi, Gianluigi
Via Bossi 15
Azzare(IT)

(74) Mandataire: Weinmiller, Jürgen
Lennéstrasse 9
D-8133 Feldafing(DE)

(54) Dispositif de fixation d'une barre de test permettant de la libérer brusquement.

(57) L'invention se réfère à un dispositif de fixation d'une barre de test en traction axiale, permettant de libérer brusquement la barre à l'aide d'un détonateur. Ce dispositif se compose d'une part d'une pièce d'ancrage (5), qui fait partie intégrale de la barre (1, 3) et qui comporte une fente allongée (7) le long de l'axe (8) de la barre et traversant cette pièce le long d'un axe perpendiculaire à l'axe de la barre, et d'autre part d'une pièce de blocage (6) qui est insérée dans ladite fente (7) tout en faisant saillie de part et d'autre de cette fente, les parties en saillie de la pièce de blocage s'appuyant sur un bâti de support (4). La pièce de blocage (6) est munie du détonateur (13), qui est susceptible de la casser en au moins deux morceaux, l'un des plans de casse se situant dans un plan qui inclut l'axe (8) de la barre et qui est perpendiculaire audit axe perpendiculaire.

Fig.1

EP 0 210 602 A1

COMMUNAUTE EUROPEENNE DE
L'ENERGIE ATOMIQUE (EURATOM)
Bâtiment Jean Monnet
Plateau du Kirchberg
B.P. 1907
L - 1019 LUXEMBOURG

## Dispositif de fixation d'une barre de test permettant de la libérer brusquement

L'invention se réfère à un dispositif de fixation d'une barre de test en traction axiale permettant de libérer brusquement la barre à l'aide d'un détonateur.

Dans un article paru dans le périodique "Institute of Physics Conference", ser. N° 21, pages 22 à 30, 1974, on décrit une technique de test de métaux à la rupture, surtout en vue de connaître le comportement accidentel d'une enceinte nucléaire. A cet effet, on insert un échantillon du matériau à tester sous forme d'une barre dans une barre de pression qui est reliée à un générateur d'une impulsion de tension longitudinale. Ce générateur se compose d'un moyen de précontrainte et d'un moyen de fixation-relâchement, ces deux moyens s'applicant aux deux extrémités d'une barre élastique qui constitue une prolongation de la barre de test et fait office d'un réservoir d'énergie.

Avant une opération de test, on bloque les moyens de fixation qui se trouvent entre la barre de test et la barre élastique, et on soumet cette dernière par le moyen de précontrainte à une tension longitudinale calibrée. Puis, on relâche brusquement les moyens de fixation, ce qui libère l'énergie stockée dans la barre élastique, cette énergie étant appliquée en tant qu'impulsion calibrée de traction à la barre de test.

./.

La présente invention concerne en particulier le moyen de fixation-relâchement, et elle a pour but de concevoir un dispositif de fixation permettant de créer une onde de choc aussi raide que possible tout en évitant des oscillations ou des forces transversales qui pourraient gêner et falsifier le test. On connaît par ledit article un dispositif de fixation d'une barre, comportant un intermédiaire fragile qui est serré contre une dent faisant partie de la barre. La libération de l'impulsion s'effectue lorsque la tension axiale dépasse une valeur de seuil à laquelle l'intermédiaire fragile se casse.

Cependant, ce dispositif ne répond pas complètement aux exigences citées ci-dessus. En particulier, l'excentricité de la dent induit des oscillations transversales, qui se superposent à l'impulsion longitudinale et qui falsifient les mesures. En outre, il est difficile, voir impossible, de synchroniser des appareils d'enregistrement tels qu'une caméra à l'impulsion ainsi générée, car le déclenchement de l'impulsion est aléatoire.

Un autre dispositif de fixation en traction longitudinale pour une barre de test est décrit dans la demande de brevet européen 79 301 353.3. Ce dispositif comporte deux boulons explosifs, qui sont appliqués à deux épaulements symétriques de la barre, et qui sont libérés simultanément par un détonateur électrique.

Ce dispositif souffre d'une certaine complexité nécessitant deux systèmes de détonation parfaitement synchronisés. En outre, toute asymétrie, soit de l'attaque du boulon aux épaulements de la barre, soit de l'explosion des boulons, induit des flexions transversales et réduit ainsi la raideur de l'onde de choc.

L'invention a pour but d'éviter ces inconvénients et de proposer un dispositif selon le préambule de la revendication 1 assurant une symétrie rigoureuse de la structure et de la commande de déclenchement à l'aide d'un seul détonateur. Ce but est atteint selon l'invention par le dispositif tel qu'il est caractérisé dans la revendication 1.

L'invention sera décrite ci-après plus en détail à l'aide d'un exemple de réalisation et des dessins.

La fig. 1 montre une coupe à travers le dispositif le long de la ligne A-A de la fig. 2.

La fig. 2 représente une vue de dessus de ce même dispositif.

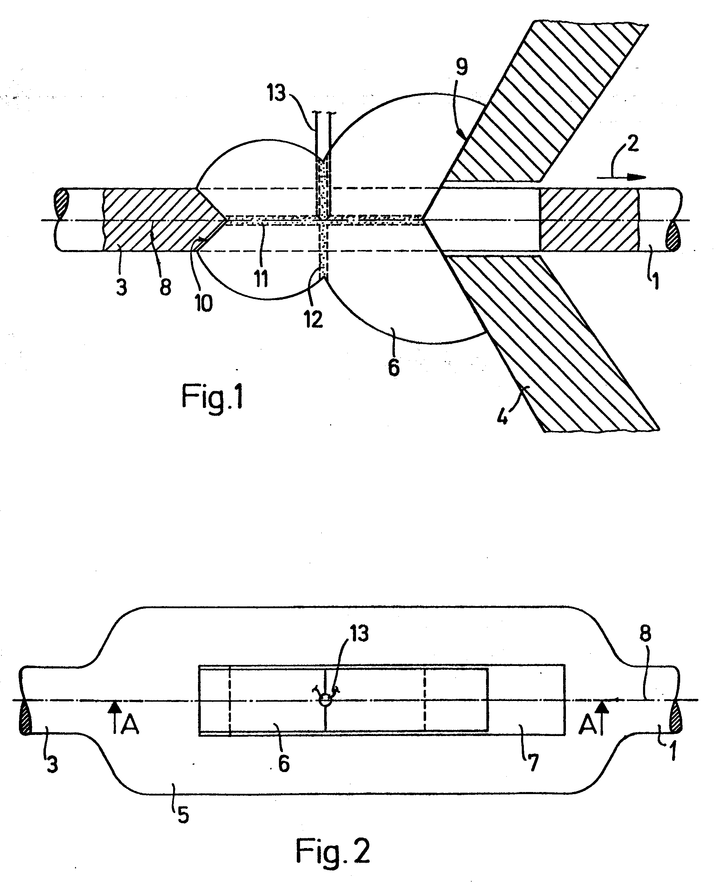

Les figures montrent un début d'une barre élastique 1, qui est soumise par un moyen non représenté tel qu'une vis différentielle à une traction longitudinale selon une flèche 2. Cette barre élastique est solidaire d'une barre de test 3 par l'intermédiaire du dispositif de fixation selon l'invention. Lorsqu'une force de traction longitudinale selon la flèche 2 est appliquée, le dispositif s'appuie contre un bâti de support 4. Le dispositif se compose d'une pièce d'ancrage 5 et d'une pièce de blocage 6. La pièce d'ancrage, qui se trouve entre la barre élastique 1 et la barre de test 3, est faite d'un acier dur de forme aplatie, dont les dimensions sont choisies pour éviter toute déformation lors des tests. Une fente longitudinale 7 traversant la pièce d'ancrage s'étend le long de l'axe 8 de la barre 1. La pièce de blocage 6 est insérée dans cette fente 7 et s'appuie par une face 9 contre le bâti de support 4, qui n'a été représenté que sur la fig. 1. D'autre part, la pièce de blocage s'appuie par deux plans inclinés 10 contre la surface intérieure du côté court de la fente éloigné du bâti du support 4. Les plans 9 et 10 sont inclinés de telle façon que la force appliquée selon la flèche 2 tend à casser la pièce de blocage le long d'un plan de casse qui inclut l'axe 8 de la barre et qui est perpendiculaire à la direction de passage de la fente à travers la pièce d'ancrage 5.

Comme il ressort de la fig. 1, la pièce de blocage comporte deux sections faibles, dont l'une coincide avec ledit plan de casse et l'autre est perpendiculaire à l'axe 8 de la barre. Des cordons d'explosif 11, 12 sont disposés dans ces plans et sont accouplés à un détonateur 13 commun, qui excite les deux cordons au point central de coupe des deux plans.

En préparation d'un essai de traction sur une barre de test 3, à laquelle sont reliées une pièce d'ancrage 5 et une barre élastique 1, on insert l'ensemble entre les manches du bâti de support 4 et on introduit la pièce d'ancrage 6 dans la fente, cette pièce s'appuyant contre ledit bâti lorsqu'une force est exercée le long de la flèche 2. La pièce de blocage a préalablement été munie des cordons d'explosif et du détonateur.

Ensuite, on applique statiquement une force de traction à la barre élastique à l'aide d'une vis différentielle ou un vérin hyxraulique non représentés, la précontrainte prédéterminée définissant l'énergie de l'onde de choc qu'on peut relâcher.

Au moment voulu de ce déclenchement, on fait exploser à l'aide du détonateur la pièce de blocage 6 le long des deux plans de casse. Grâce à l'inclinaison des plans 9 et 10, les morceaux de la pièce de blocage s'écartent aussitôt de la fente, ce qui libère la barre et transfert l'énergie stockée dans la barre élastique 1 sous forme d'une onde de choc à la barre de test 3. Cette libération de l'énergie stockée se fait dans une symétrie parfaite, car le premier plan de casse, qui inclut l'axe 8 de la barre, est aussi un plan de symétrie de la pièce de blocage 8.

L'invention n'est pas limitée à l'exemple de réalisation décrit ci-dessus. On peut en particulier se borner à prévoir un seul plan de casse, à savoir celui qui inclut l'axe 8 de la barre. Le cordon explosif peut être disposé dans des trous intérieurs placés dans ces plans.

On peut aussi orienter le plan 9 d'appui de la pièce de blocage 6 contre le bâti de support 4 perpendiculairement à l'axe 8, bien que l'inclinaison de ce plan paraisse préférable.

La pièce de blocage est également faite d'un acier dur, qui n'est pas déformé plastiquement par les forces en jeu.

REVENDICATIONS

1. Dispositif de fixation d'une barre de test en traction axiale, permettant de libérer brusquement la barre à l'aide d'un détonateur, caractérisé en ce qu'il se compose d'une part d'une pièce d'ancrage (5), qui fait partie intégrale de la barre (1, 3) et qui comporte une fente allongée (7) le long de l'axe (8) de la barre et traversant cette pièce le long d'un axe perpendiculaire à l'axe de la barre, et d'autre part d'une pièce de blocage (6) qui est insérée dans ladite fente (7) tout en faisant saillie de part et d'autre de cette fente, les parties en saillie de la pièce de blocage s'appuyant sur un bâti de support (4), et que la pièce de blocage (6) est munie du détonateur (13), qui est susceptible de la casser en au moins deux morceaux, l'un des plans de casse se situant dans un plan qui inclut l'axe (8) de la barre et qui est perpendiculaire audit axe perpendiculaire.

2. Dispositif selon la revendication 1, caractérisé en ce que la pièce de blocage (6) s'appuie contre le bâti de support selon des plans (9) qui font des angles aigus avec ledit plan de casse.

3. Dispositif selon l'une des revendications 1 à 2, caractérisé en ce que le détonateur (13) est susceptible de casser la pièce de blocage (6) en quatre morceaux, le second plan de casse étant perpendiculaire à l'axe (8) de la barre.

4. Dispositif selon l'une des revendications précédentes, caractérisé en ce que les plans de casse sont définis d'une part par l'emplacement d'un cordon explosif (11, 12) dans ces plans, et d'autre part par des sections affaiblies de la pièce (6) dans ces plans.

5. Dispositif selon l'une des revendications précédentes, caractérisé en ce que la surface intérieure du côté de le fente (7) éloigné du bâti de support (4) comporte deux plans inclinés

./.

0210602

(10), de sorte que la fente sèvase à partir du premier plan de casse, la pièce de blocage (6) s'appuyant sur ces plans inclinés (10).

Fig.1

Fig.2

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| D,A | EP-A-0 007 740 (EURATOM)<br>* Page 4, lignes 14-23; figure 1 * | 1 | G 01 N 3/02<br>G 01 N 3/30 |
| A | US-A-3 407 651 (Y. SOPHY)<br>* Colonne 3, ligne 43 - colonne 4, ligne 9; figures 1,2 * | 1 | |
| A | US-A-2 713 287 (J.J. DOMOJ)<br>* Colonne 2, ligne 8 - colonne 3, ligne 4; figures 1,2 * | 1 | |

DOMAINES TECHNIQUES
RECHERCHES (Int. Cl.4)

G 01 N 3/00
F 42 B 3/00

Le present rapport de recherche a été etabli pour toutes les revendications

| Lieu de la recherche<br>LA HAYE | Date d achèvement de la recherche<br>05-11-1986 | Examinateur<br>ANTHONY R.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& :—membre de la même famille, document correspondant

OEB Form 1503 03.82